# EUROPEAN PATENT SPECIFICATION

(11) **EP 3 869 206 B1**
(45) Date of publication and mention of the grant of the patent: **01.05.2024**
(21) Application number: 21157755.6
(22) Date of filing: 18.02.2021
(51) Int. Cl.: G01N 35/02, G01N 35/04, G01N 35/00

(54) **PREPROCESSING SYSTEM**
VORVERARBEITUNGSSYSTEM
SYSTÈME DE PRÉTRAITEMENT

(30) Priority: 20.02.2020 JP 2020027515
(43) Date of publication of application: 25.08.2021
(73) Proprietor: Shimadzu Corporation, Kyoto 604-8511 (JP)
(72) Inventor: NUMATA, Koji, Nakagyo-ku, Kyoto-shi, Kyoto 604-8511 (JP)
(74) Representative: Müller-Boré & Partner Patentanwälte PartG mbB

(56) References cited:
- WO-A1-2010/056903
- CN-A- 108 414 778
- JP-A- 2015 001 460
- US-A1- 2016 231 343

## Description

### BACKGROUND

### Technical Field

The present invention relates to a preprocessing system.

### Description of Related Art

Analyzers are known as devices that perform various analyses on samples. For example, JP 2015-001460 A describes an automatic analysis system including a plurality of automatic analyzers and a specimen transport device. Each automatic analyzer includes a belt conveyor and a sampling analyzer and also includes a specimen introduction mechanism that introduces a specimen rack on the belt conveyor to the sampling analyzer.

In two adjacent automatic analyzers, a conveyor at a preceding stage and a conveyor at a succeeding stage are arranged such that a start end of the succeeding conveyor is arranged on the side of a terminal end of the preceding conveyor. The specimen transport device includes a transport mechanism and is arranged between the preceding conveyor and the succeeding conveyor. The transport mechanism of the specimen transport device holds the specimen rack at the terminal end of the preceding conveyor and transports the specimen rack to the start end of the succeeding conveyor.

US 2016/231343 A1 describes sample rack conveying apparatus, a sample rack conveying pipeline, and a sample rack conveying method. The sample rack conveying apparatus includes a track, a detector and dual-channel track switching areas. The detector provided at an outside of the analysis areas to detect whether there is a test tube or not. The dual-channel track switching areas are defined at two ends of the track and positions between every two analysis areas. The track includes an outer track and a parallel inner track. The inner track defines at least two analysis areas. The dual-channel track switching areas include two parallel connecting channels. The connecting channels are moved along a direction perpendicular to the track to transfer the tracks between the inner track and the outer track.

CN 108 414 778 A describes a sectional conveying and rotary scanning device for single-row test tubes. The sectional conveying and rotary scanning device comprises a charging-conveying unit, a unit to be scanned and a rotary scanning unit, wherein the charging-conveying unit is used for conveying single-row blood collection tubes onto the unit to be scanned. The unit to be scanned is used for conveying the blood collection tubes conveyed by the charging-conveying unit to the rotary scanning unit and recognizing scanning information in order to determine a corresponding sorting-grading outlet. The rotary scanning unit is used for driving the blood collection tubes to rotate axially, scanning and recognizing information about the blood collection tubes and deciding a corresponding sorting-grading outlet.

WO 2010/056903 describes an automated sample processing system having a sample input adapted to simultaneously receive a number of sample containers, a reagent input adapted to receive one or more new reagent supplies, a consumable input adapted to receive one or more new consumable supplies, a solid waste output adapted to receive used consumable supplies, a liquid waste output adapted to receive one or more used reagent supplies, and a processing center.

### SUMMARY

In some cases, preprocessing of a sample is performed before an analysis of the sample is performed in an analyzer. Similarly to the analysis of the sample, the preprocessing of the sample is also desired to be automatically performed. However, the preprocessing includes many steps, and different steps are required for each type of the preprocessing; therefore, it is not easy to implement a system that performs desired preprocessing.

An object of the present invention is to provide a preprocessing system capable of automatically performing preprocessing of a sample.

The underlying object is solved by a preprocessing system according to independent claim 1. Additional embodiments are defined in the dependent claims.

The preprocessing system performs preprocessing of a sample before analysis, including a plurality of preprocessing units, each preprocessing unit including a belt conveyor that transports a sample bottle in which the sample is sealed, and a controller that controls an operation of the belt conveyor, at least one of the plurality of preprocessing units further including a processor that performs specific preprocessing based on control performed by the controller, the belt conveyor of each preprocessing unit being configured to be arrangeable to be adjacent to a belt conveyor of another preprocessing unit in a transport direction and to be capable of transferring the sample bottle to the adjacent
belt conveyor or receiving the sample bottle from the adjacent belt conveyor.

According to the present invention, the preprocessing of the sample can be automatically performed.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a schematic diagram showing a preprocessing system according to one embodiment of the present invention;
Fig. 2 is a plan view showing a configuration of a belt conveyor;
Fig. 3 is a perspective view of the belt conveyor;
Fig. 4 is a diagram for explaining one example of an operation of a preprocessing unit;
Fig. 5 is a diagram for explaining the one example of the operation of the preprocessing unit;
Fig. 6 is a diagram showing one example of distance adjustment between a plurality of racks;
Fig. 7 is a diagram showing another example of distance adjustment between a plurality of racks;
Fig. 8 is a diagram for explaining another example of the operation of the preprocessing unit;
Fig. 9 is a schematic diagram showing one example of the preprocessing system;
Fig. 10 is a diagram for explaining an operation of a first preprocessing unit;
Fig. 11 is a diagram for explaining an operation of a second preprocessing unit;
Fig. 12 is a diagram for explaining an operation of a third preprocessing unit;
Fig. 13 is a diagram for explaining an operation of a fourth preprocessing unit; and
Fig. 14 is a diagram for explaining an operation of a fifth preprocessing unit.

### DETAILED DESCRIPTION

### (1) Configuration of Preprocessing System

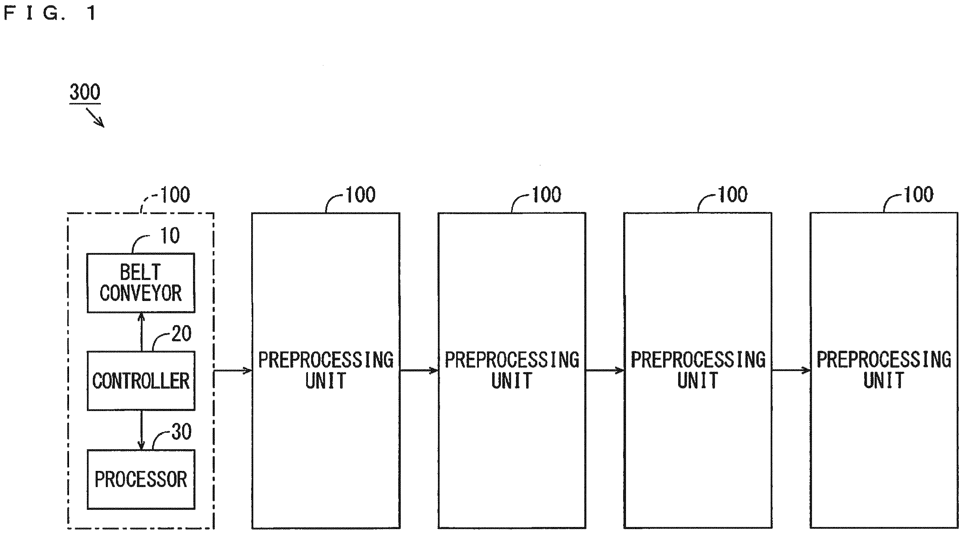

A preprocessing system according to an embodiment of the present invention will be described in detail below with reference to the drawing. Fig. 1 is a schematic diagram showing a preprocessing system according to one embodiment of the present invention. As shown in Fig. 1, a preprocessing system 300 includes a plurality of (five in this example) preprocessing units 100 to perform preprocessing of a sample before analysis in an analyzer. The plurality of preprocessing units 100 are configured such that arrangement of the preprocessing units 100 (i.e., an order in which the preprocessing units 100 are arranged) is changeable depending on the contents of the analysis of the sample.

Each preprocessing unit 100 includes a belt conveyor 10 and a controller 20. Also, at least one preprocessing unit 100 further includes a processor 30. The belt conveyor 10 transports a sample bottle for storing a sample. The controller 20 includes, for example, a CPU (Central Processing Unit) or a microcomputer to control operations of the belt conveyor 10 and the processor 30.

The processor 30 performs specific preprocessing on a material stored in the sample bottle or on the sample bottle. The preprocessing may include at least one of attachment/detachment of a cap to/from the sample bottle, storage of the sample in the sample bottle, addition of an additive to the sample, shaking of the sample bottle, centrifugation of contents of the sample bottle, extraction of the contents from the sample bottle, and injection of the sample into an analyzing vial.

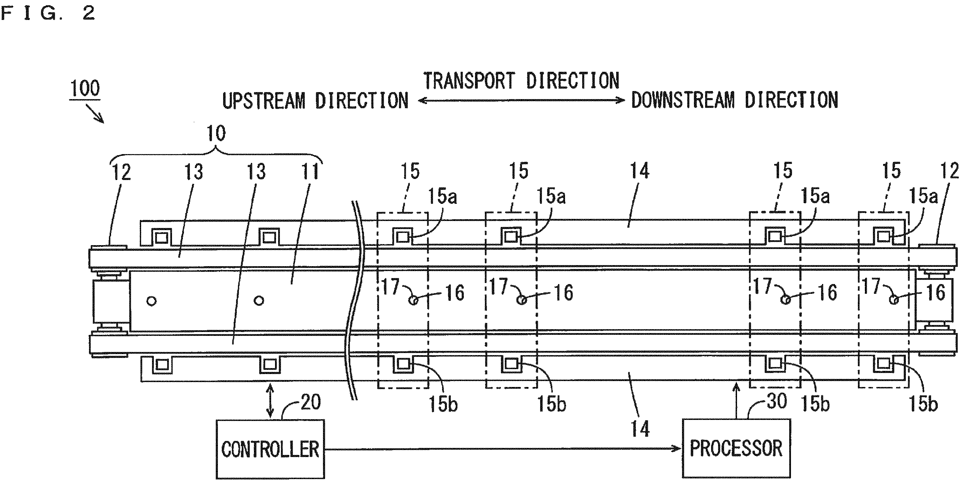

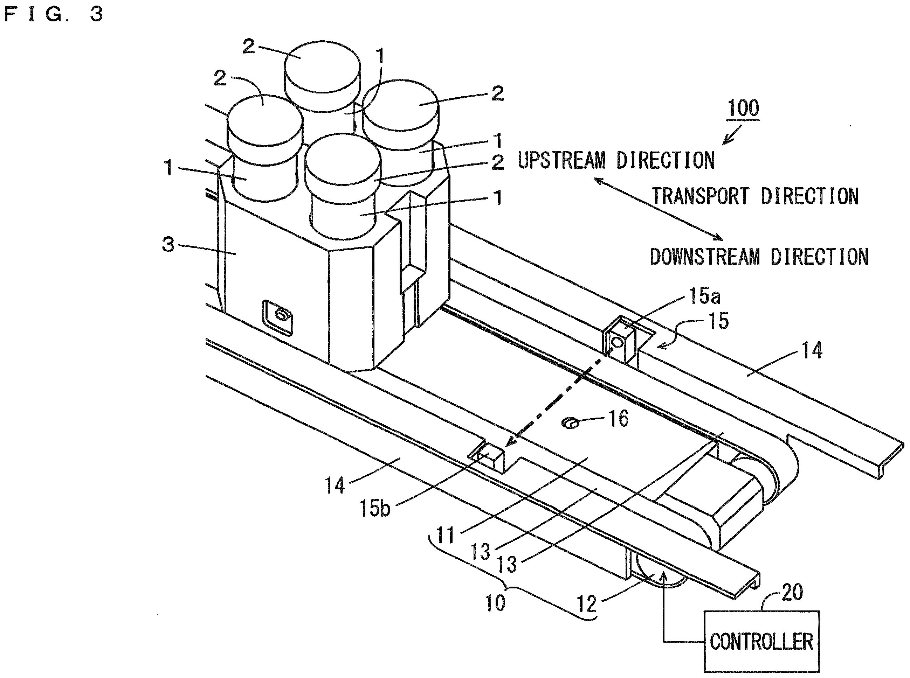

Fig. 2 is a plan view showing a configuration of the belt conveyor 10. Fig. 3 is a perspective view of the belt conveyor 10. As shown in Figs. 2 and 3, the belt conveyor 10 includes a rail 11, a pair of rollers 12, and a pair of belts 13. The rail 11 extends in one direction. The direction in which the rail 11 extends is referred to as the transport direction.

The paired rollers 12 are arranged in parallel at opposite ends of the rail 11 in the transport direction. The paired belts 13 are arranged on opposite sides of the rail 11 and stretched between the paired rollers 12. Each belt 13 is a sliding belt, for example, and has a comparatively low coefficient of friction.

In this embodiment, a plurality of sample bottles 1 being held in a rack 3 are transported by the belt conveyor 10. More specifically, four sample bottles 1 are held by the rack 3. The sample bottles 1 are centrifuge tubes, for example, and a threaded cap 2 is attached to each sample bottle 1. In this state, the rack 3 is placed on the paired belts 13 of the belt conveyor 10. The paired rollers 12 are rotated, whereby the rack 3 placed on the belts 13 is transported in the transport direction.

A pair of guide rails 14 is provided on the opposite sides of the belt conveyor 10 to extend in the transport direction. The paired guide rails 14 prevent the rack 3 from departing from the belt conveyor 10. A plurality of sensors 15 are provided intermittently in the transport direction. Each sensor 15 detects the rack 3 transported by the belt conveyor 10 at a predetermined position. In this example, each sensor 15 includes a light emitter 15a and a light receiver 15b that are respectively arranged on the opposite sides of the belt conveyor 10 to face each other.

A plurality of holes 16 are formed intermittently in the transport direction in a center portion of an upper surface of the rail 11. The plurality of holes 16 correspond to the plurality of sensors 15, respectively. A mechanical stopper 17 can be projected upward from each hole 16. The stopper 17 is a rod-like member and used for temporarily stopping the transport of the rack 3 at a predetermined position on the belt conveyor 10. While the stopper 17 is not projected, an upper end of the stopper 17 is at a position further downward than an upper surface (a transport surface) of each belt 13. While the stopper 17 is projected, the upper end of the stopper 17 is at a position further upward than the transport surface of each belt 13.

The controller 20 drives an actuator not shown to rotate the paired rollers 12. The controller 20 can switch rotation directions of the paired rollers 12. One rotation direction of the rollers 12 is referred to as a forward direction, while another rotation direction of the rollers 12 is referred to as a reverse direction. A direction in which the rack 3 is transported when the paired rollers 12 are rotated forward is referred to as a downstream direction, while a direction in which the rack 3 is transported when the paired rollers 12 are rotated in reverse is referred to as an upstream direction.

Also, the controller 20 acquires a result of detection of the rack 3 from each sensor 15. Further, the controller 20 controls an actuator such as an air cylinder or a stepping motor not shown based on the detection result acquired from the sensor 15, thereby controlling an operation of the stopper 17 corresponding to the sensor 15. Details of the control by the controller 20 will be described later.

The processor 30 performs preprocessing on the material stored in each sample bottle 1 held in the rack 3 or on each sample bottle 1. Here, the processor 30 may perform the preprocessing on the materials stored in the plurality of sample bottles 1 held in the rack 3 or on the plurality of sample bottles simultaneously (in parallel). Alternatively, the processors 30 of two or more preprocessing units 100 may perform the preprocessing on the materials stored in the sample bottles 1 held in the different racks 3 or on the sample bottles 1 simultaneously (in parallel). In these cases, the preprocessing can be performed on a large number of samples in a short period of time.

### (2) Example of Operation of Preprocessing Unit

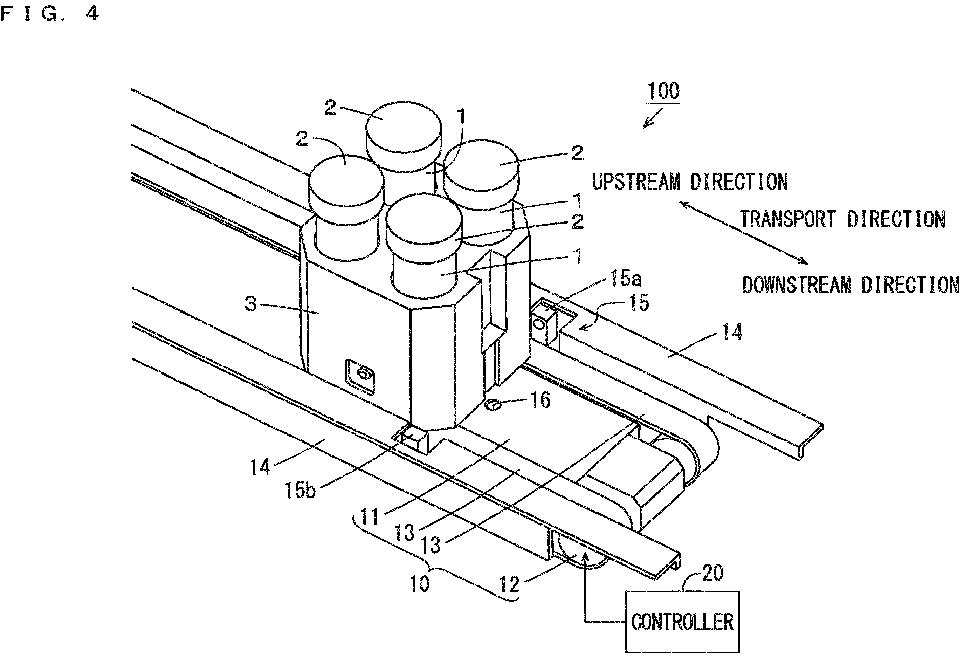

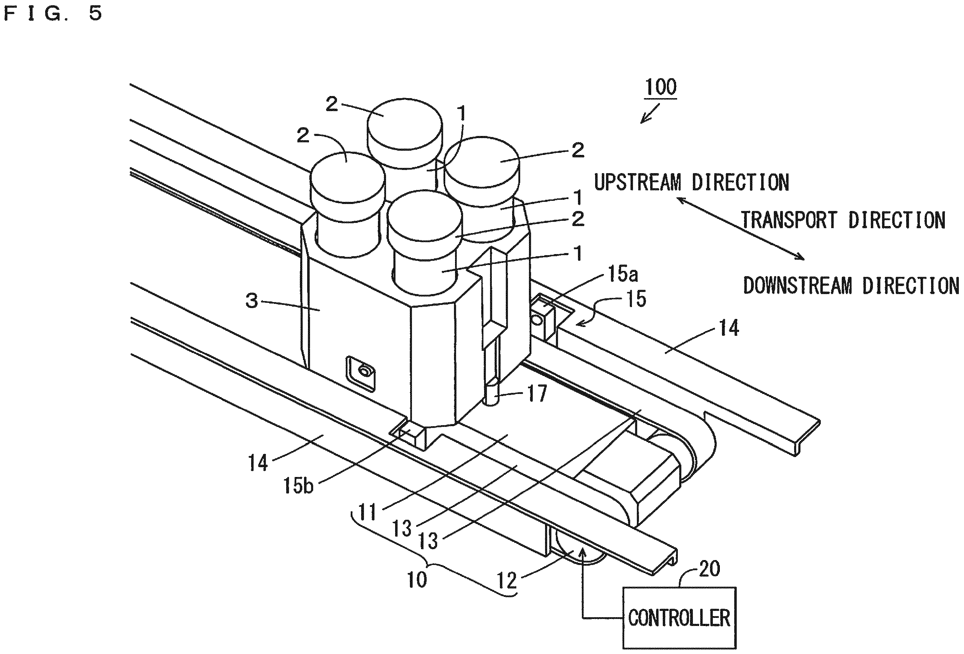

Figs. 4 and 5 are diagrams for explaining one example of an operation of the preprocessing unit 100. In this example, the light emitter 15a of each sensor 15 emits light toward the corresponding light receiver 15b as shown by the thick one-dotted dash line in Fig. 3. In a case where the rack 3 is not positioned between the light emitter 15a and the light receiver 15b, the light receiver 15b receives the light emitted by the corresponding light emitter 15a and applies a light receiving signal indicating light receiving intensity as a detection result to the controller 20.

On the other hand, as shown in Fig. 4, in a case where the rack 3 is transported to a position between the light emitter 15a and the light receiver 15b, the light emitted by the light emitter 15a is blocked by the rack 3. As such, the light receiver 15b does not receive the light emitted by the corresponding light emitter 15a. In this case, the light receiving signal is not applied to the controller 20. Thus, the controller 20 determines that the rack 3 is detected by the sensor 15.

In a case where the rack 3 is detected by a predetermined sensor 15, the controller 20 causes the stopper 17 to be projected from the hole 16 corresponding to the predetermined sensor 15 as shown in Fig. 5. The projected stopper 17 abuts against an end surface of the rack 3. In this case, the transport of the rack 3 is temporarily stopped while the belt conveyor 10 is not stopped. After a predetermined period of time elapses, the controller 20 draws the projected stopper 17 into the hole 16 again. Thus, the transport of the rack 3 is restarted.

With this configuration, the transport of the racks 3 other than the rack 3 being stopped by the stopper 17 is continued. Therefore, the racks 3 can be stopped independently. In this example, some of the plurality of holes 16 are arranged downstream of the corresponding sensors 15. The stoppers 17 corresponding to these holes 16 are used to stop the transport of the racks 3 transported in the downstream direction. On the other hand, the others of the plurality of holes 16 are arranged upstream of the corresponding sensors 15. The stoppers 17 corresponding to these holes 16 are used to stop the transport of the racks 3 transported in the upstream direction.

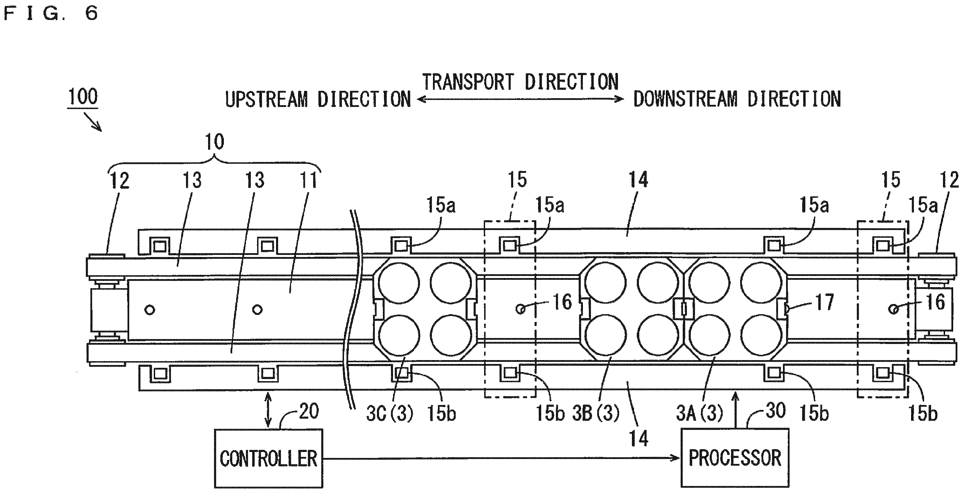

A distance between the plurality of racks 3 transported by the belt conveyor 10 can be adjusted by control of an operation of the stoppers 17. Fig. 6 is a diagram showing one example of distance adjustment between the plurality of racks 3. In the example of Fig. 6, three racks 3 (hereinafter referred to as racks 3A, 3B, 3C) are transported in this order in the downstream direction by the belt conveyor 10. Here, the transport of the rack 3A is temporarily stopped at a predetermined position by the stopper 17. This can reduce the distance between the rack 3A and the rack 3B.

In this example, the distance between the rack 3A and the rack 3B is reduced to zero, so that the rack 3A and the rack 3B come into contact with each other. In this case, the processor 30 can simultaneously and easily perform preprocessing on the materials stored in the plurality of sample bottles 1 held in the two racks 3A, 3B or on the plurality of sample bottles 1.

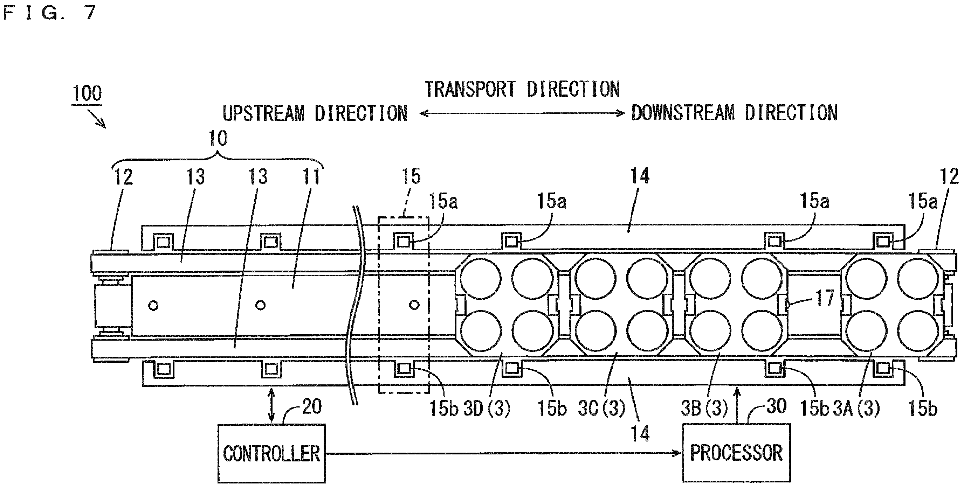

Fig. 7 is a diagram showing another example of the distance adjustment between the plurality of racks 3. In the example of Fig. 7, four racks 3 (hereinafter referred to as racks 3A, 3B, 3C, 3D) are transported in this order in the downstream direction by the belt conveyor 10. Here, the transport of each rack 3A to 3D is temporarily stopped at a predetermined position by the stopper 17. This can increase the distance between the adjacent racks 3A to 3D. In this example, the distance between the rack 3A and the rack 3B is increased.

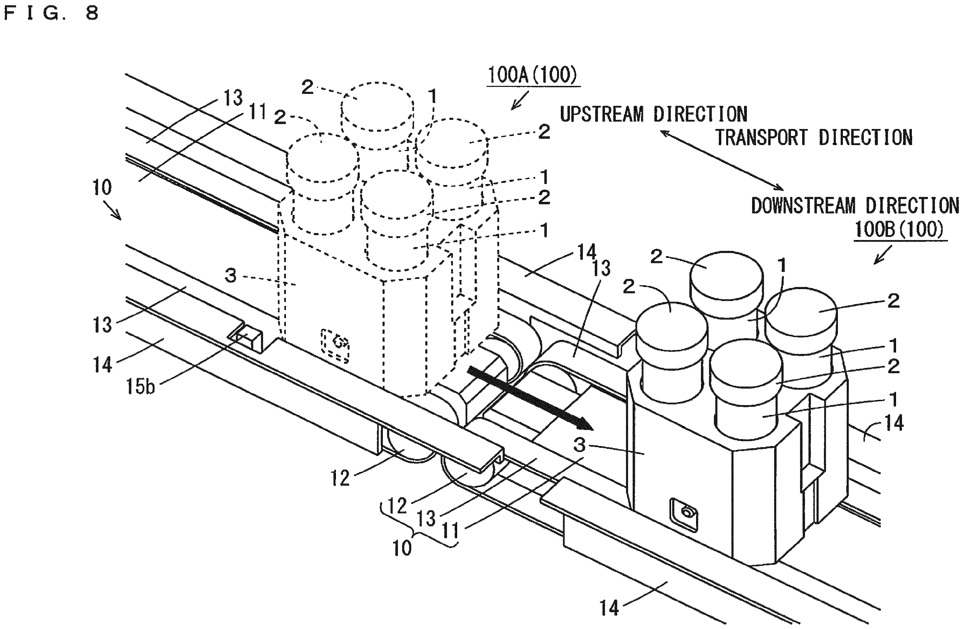

Fig. 8 is a diagram for explaining another example of the operation of the preprocessing unit 100. In the example of Fig. 8, two preprocessing units 100 are arranged adjacently in the transport direction. The preprocessing unit 100 positioned upstream is hereinafter referred to as a preprocessing unit 100A, and the preprocessing unit 100 positioned downstream is hereinafter referred to as a preprocessing unit 100B. The belt conveyor 10 of the preprocessing unit 100A and the belt conveyor 10 of the preprocessing unit 100B are arranged in close proximity to each other on the same level in the transport direction. The two adjacent preprocessing units 100A, 100B can mutually directly transfer the rack 3 without using any transport device.

More specifically, when the rack 3 is transferred from the preprocessing unit 100A to the preprocessing unit 100B, each roller 12 of the preprocessing unit 100A is rotated in the forward direction. Also, each roller 12 of the preprocessing unit 100B is rotated in the forward direction at the same rotation speed as the rotation speed of each roller 12 of the preprocessing unit 100A. Thus, the rack 3 transported by the belt conveyor 10 of the preprocessing unit 100A is transferred to the belt conveyor 10 of the preprocessing unit 100B as denoted by the thick arrow in Fig. 8.

Similarly, when the rack 3 is transferred from the preprocessing unit 100B to the preprocessing unit 100A, each roller 12 of the preprocessing unit 100B is rotated in the reverse direction. Also, each roller 12 of the preprocessing unit 100A is rotated in the reverse direction at the same rotation speed as the rotation speed of each roller 12 of the preprocessing unit 100B. Thus, the rack 3 transported by the belt conveyor 10 of the preprocessing unit 100B is transferred to the belt conveyor 10 of the preprocessing unit 100A.

While the rotation speed of each roller 12 of the preprocessing unit 100A is the same as the rotation speed of each roller 12 of the preprocessing unit 100B during the transfer of the rack 3 in the above-described example, the embodiment is not limited to this. As long as the rack 3 is transferable between the preprocessing unit 100A and the preprocessing unit 100B, the rotation speed of each roller 12 of the preprocessing unit 100A and the rotation speed of each roller 12 of the preprocessing unit 100B do not have to be the same and may be slightly different from each other.

### (3) Specific Example of Preprocessing System

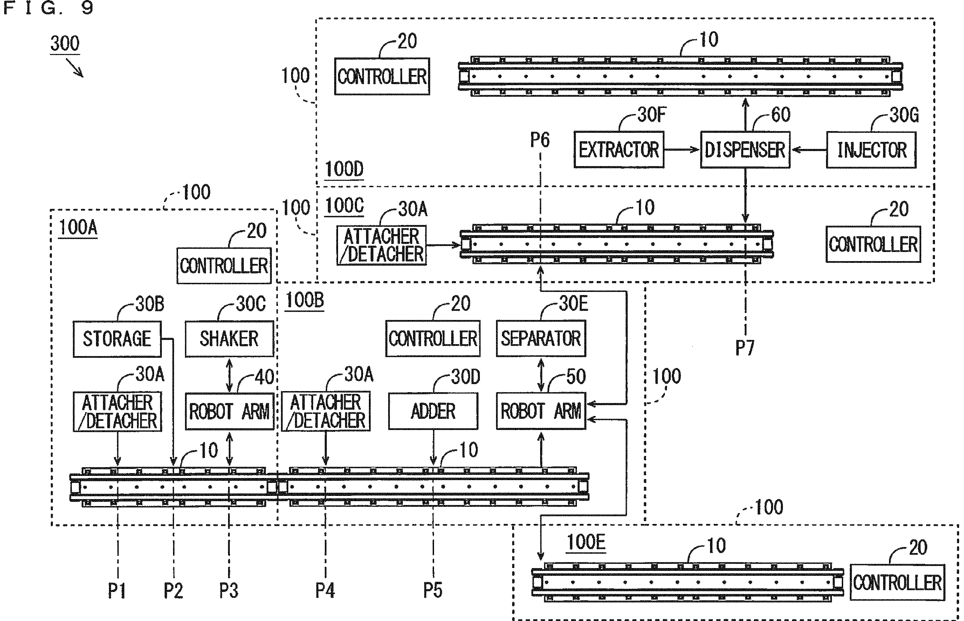

Fig. 9 is a schematic diagram showing one example of the preprocessing system 300. As shown in Fig. 9, the preprocessing system 300 includes five preprocessing units 100. In the case of distinguishing the five preprocessing units 100, the five preprocessing units 100 are referred to as preprocessing units 100A to 100E, respectively. As described above, each of the preprocessing units 100A to 100E includes the belt conveyor 10 and the controller 20.

Also, the preprocessing unit 100A includes an attacher/detacher 30A, a storage 30B, and a shaker 30C as the processors 30, and further includes a robot arm 40. The preprocessing unit 100B includes the attacher/detacher 30A, an adder 30D, and a separator 30E as the processors 30 and further includes a robot arm 50. The preprocessing unit 100C includes the attacher/detacher 30A as the processor 30. The preprocessing unit 100D includes an extractor 30F and an injector 30G as the processors 30 and further includes a dispenser 60. The preprocessing unit 100E does not include the processor 30.

The attacher/detacher 30A rotates the cap 2 of each sample bottle 1 held in the rack 3 of Fig. 3 to attach the cap 2 to the sample bottle 1 or detach the cap 2 from the sample bottle 1. The storage 30B measures a sample to be analyzed and stores the measured sample in each sample bottle 1. The shaker 30C shakes the rack 3 to agitate the contents of each sample bottle 1. The adder 30D adds a predetermined solvent or an additive such as an internal standard reagent into each sample bottle 1.

The separator 30E applies a centrifugal force to the rack 3 to separate the contents of each sample bottle 1 for each component. The extractor 30F extracts the contents including the sample from each sample bottle 1 through a pipette provided in the dispenser 60. The injector 30G injects the contents including the sample in the sample bottle 1 into an analyzing vial through the pipette provided in the dispenser 60.

The robot arm 40 transports the rack 3 between the belt conveyor 10 and any of the processors 30. The robot arm 50 transports the rack 3 among the plurality of preprocessing units 100. In this example, the robot arm 50 can also transport the rack 3 between the belt conveyor 10 and any of the processors 30 similarly to the robot arm 40. The robot arms 40, 50 are examples of a first robot arm and a second robot arm, respectively. The dispenser 60 performs dispensing processing of the sample using the pipette.

Similarly to the example of Fig. 8, the preprocessing unit 100B is arranged downstream of the preprocessing unit 100A so as to be adjacent to the preprocessing unit 100A in the transport direction. Each of the preprocessing units 100C to 100E is arranged in parallel with the preprocessing unit 100B. The belt conveyors 10 of the preprocessing units 100A, 100B are of the same height. On the other hand, the belt conveyors 10 of the preprocessing units 100B to 100E may be of different heights.

In the preprocessing system 300, positions P1 to P7 are defined in this order from upstream to downstream. The positions P1 to P7 mean the positions in the transport direction. An operation of the preprocessing system 300 of Fig. 9 will be described below.

### (4) Operation of Preprocessing System

### (a) First preprocessing unit

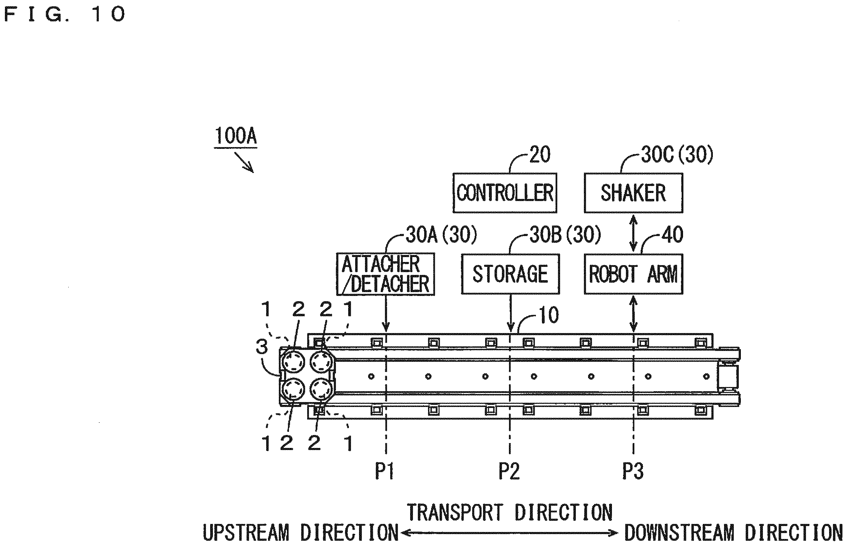

Fig. 10 is a diagram for explaining an operation of the first preprocessing unit 100A. As shown in Fig. 10, the rack 3 in which four sample bottles 1 are held is placed at an upstream end of the belt conveyor 10 of the preprocessing unit 100A. The belt conveyor 10 transports the rack 3 to the position P1 in the downstream direction. At the position P1, the attacher/detacher 30A detaches the cap 2 from each sample bottle 1 held in the rack 3.

Then, the belt conveyor 10 transports the rack 3 to the position P2 in the downstream direction. At the position P2, the storage 30B measures a sample to be analyzed and stores the measured sample into each sample bottle 1. The sample to be analyzed includes, for example, food. Then, the belt conveyor 10 rotates the belts 13 in reverse to transport the rack 3 to the position P1 in the upstream direction. At the position P1, the attacher/detacher 30A attaches the cap 2 to each sample bottle 1 held in the rack 3.

Then, the belt conveyor 10 transports the rack 3 to the position P3 in the downstream direction. At the position P3, the robot arm 40 transports the rack 3 from the belt conveyor 10 to the shaker 30C. The shaker 30C shakes the rack 3. Thus, the sample in the sample bottle 1 is agitated. Since the rack 3 is transported to the shaker 30C by the robot arm 40 in this way, the sample bottle 1 can be shaken even in a case where the shaker 30C is not arranged on a transport path of the rack 3 on the belt conveyor 10. Thereafter, the robot arm 40 transports the rack 3 from the shaker 30C to the belt conveyor 10.

Then, the belt conveyor 10 transports the rack 3 to a downstream end of the belt conveyor 10. Thus, the rack 3 is transferred to an upstream end of the belt conveyor 10 of the preprocessing unit 100B of Fig. 9. Also, as will be described later, the rack 3, after an additive is added into each sample bottle 1 in the preprocessing unit 100B, is transferred from the preprocessing unit 100B to the downstream end of the belt conveyor 10 of the preprocessing unit 100A.

In this case, the belt conveyor 10 transports the rack 3 to the position P3 in the upstream direction. At the position P3, the robot arm 40 transports the rack 3 from the belt conveyor 10 to the shaker 30C. The shaker 30C shakes the rack 3. Thus, the sample and the additive in the sample bottle 1 are agitated. Then, the robot arm 40 transports the rack 3 from the shaker 30C to the belt conveyor 10. After that, the belt conveyor 10 transports the rack 3 to the downstream end. Thus, the rack 3 is transferred again to the upstream end of the belt conveyor 10 of the preprocessing unit 100B of Fig. 9.

### (b) Second Preprocessing Unit

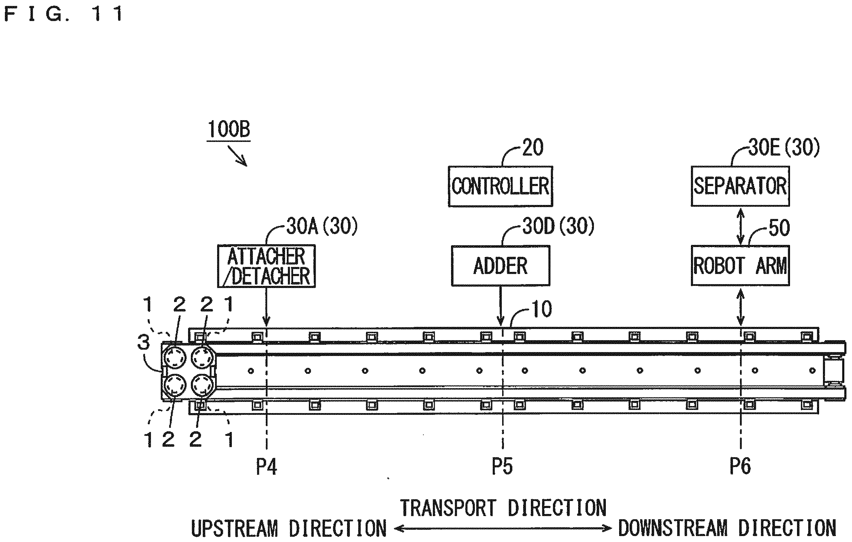

Fig. 11 is a diagram for explaining an operation of the second preprocessing unit 100B. As shown in Fig. 11, the rack 3 transferred from the preprocessing unit 100A of Fig. 10 is placed at the upstream end of the belt conveyor 10 of the preprocessing unit 100B. The belt conveyor 10 transports the rack 3 to the position P4 in the downstream direction. At the position P4, the attacher/detacher 30A detaches the cap 2 from each sample bottle 1 held in the rack 3.

Then, the belt conveyor 10 transports the rack 3 to the position P5 in the downstream direction. At the position P5, the adder 30D adds an additive into each sample bottle 1 in the rack 3. After that, the belt conveyor 10 transports the rack 3 to the position P4 in the upstream direction. At the position P4, the attacher/detacher 30A attaches the cap 2 to each sample bottle 1 held in the rack 3.

Then, the belt conveyor 10 transports the rack 3 to the upstream end. Thus, the rack 3 is transferred to the downstream end of the belt conveyor 10 of the preprocessing unit 100A of Fig. 9. In this case, as described above, the sample and the additive in the sample bottle 1 are agitated in the preprocessing unit 100A, and the rack 3 after agitation is transferred again from the preprocessing unit 100A to the upstream end of the belt conveyor 10 of the preprocessing unit 100B.

Then, the belt conveyor 10 transports the rack 3 to the position P6 in the downstream direction. At the position P6, the robot arm 50 is arranged to bridge over the belt conveyors 10 of the preprocessing units 100B to 100E and transports the rack 3 from the belt conveyor 10 to the separator 30E. The separator 30E applies a centrifugal force to the rack 3. Thus, the contents of each sample bottle 1 are separated for each component.

In the separator 30E, a plurality of racks 3 (e.g., four racks 3) are simultaneously stored, and centrifugation is simultaneously performed on the stored plurality of racks 3. Here, in the preprocessing unit 100B, a distance between each of the plurality of racks 3 is adjusted using the stopper 17 of Figs. 5 to 7, so that the plurality of racks 3 can easily be stored in the separator 30E at an appropriate time.

After that, the robot arm 50 transports the rack 3 from the separator 30E to the preprocessing unit 100C of Fig. 9. Also, as will be described later, the robot arm 50 transports the rack 3 from the preprocessing unit 100C to the preprocessing unit 100E of Fig. 9. In this way, even in a case where the belt conveyors 10 of the preprocessing units 100C, 100E are not arranged adjacently to the belt conveyor 10 of the preprocessing unit 100B in the transport direction, the sample bottle 1 can be transported between these belt conveyors 10 by the robot arm 50.

### (c) Third Preprocessing Unit

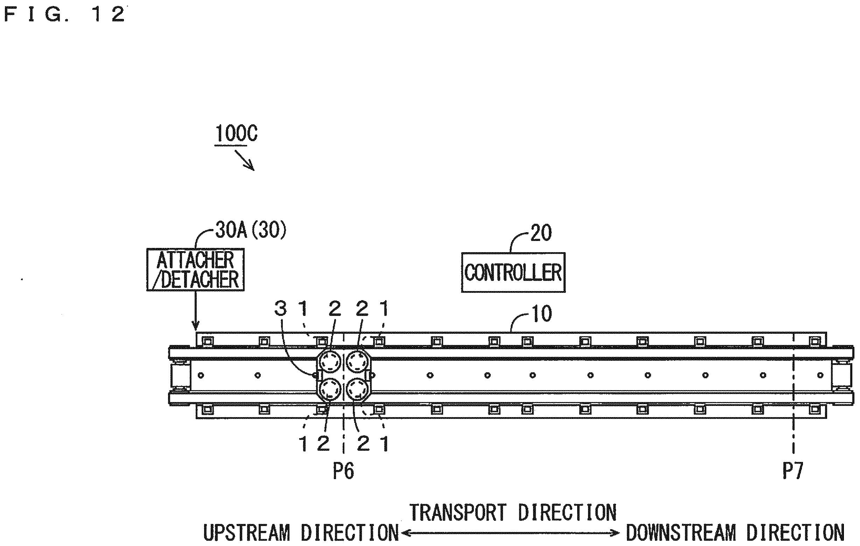

Fig. 12 is a diagram for explaining an operation of the third preprocessing unit 100C. As shown in Fig. 12, the rack 3 transferred from the preprocessing unit 100B of Fig. 11 is placed at the position P6 of the belt conveyor 10 of the preprocessing unit 100C by the robot arm 50 of Fig. 11. The belt conveyor 10 transports the rack 3 to an upstream end of the belt conveyor 10. At the upstream end, the attacher/detacher 30A detaches the cap 2 from each sample bottle 1 held in the rack 3.

Then, the belt conveyor 10 transports the rack 3 to the position P7 in the downstream direction. The position P7 may be a downstream end of the belt conveyor 10. At the position P7, the transport of the rack 3 is stopped for a predetermined period of time. As will be described later, at this point of time, the contents of each sample bottle 1 in the rack 3 are extracted. After that, the belt conveyor 10 transports the rack 3 to the upstream end. At the upstream end, the attacher/detacher 30A attaches the cap 2 to each sample bottle 1 held in the rack 3.

Then, the belt conveyor 10 transports the rack 3 to the position P6 in the downstream direction. At this point of time, the robot arm 50 of the preprocessing unit 100B of Fig. 11 transports the rack 3 to the preprocessing unit 100E as described above.

### (d) Fourth Preprocessing Unit

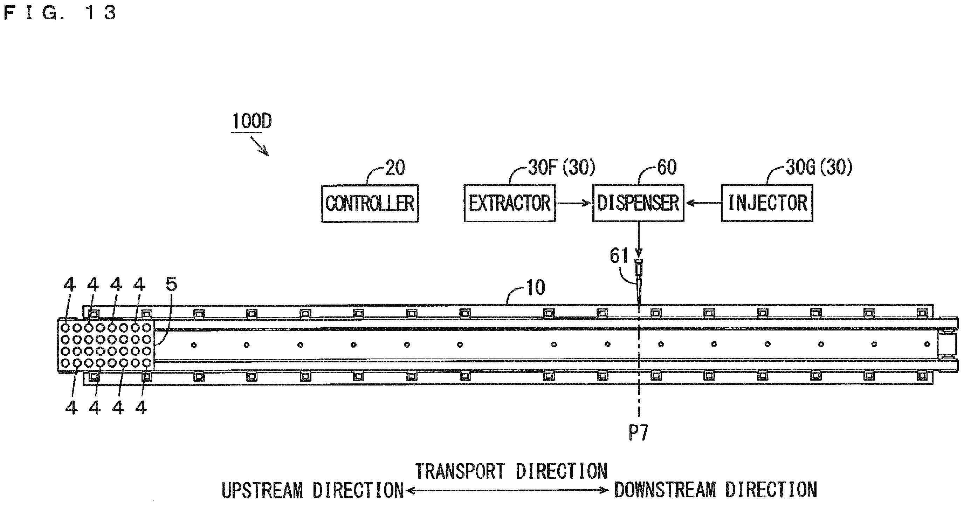

Fig. 13 is a diagram for explaining an operation of the fourth preprocessing unit 100D. As shown in Fig. 13, a rack 5 in which a plurality of vials 4 are held is placed at an upstream end of the belt conveyor 10 of the preprocessing unit 100D. The belt conveyor 10 transports the rack 5 to the position P7 in the downstream direction.

At the position P7, the dispenser 60 is arranged to bridge over the belt conveyors 10 of the preprocessing units 100C, 100D. The dispenser 60 moves from the position P7 of the preprocessing unit 100D to the position P7 of the preprocessing unit 100C of Fig. 12, and inserts a tip of a pipette 61 into any of the sample bottles 1 in the rack 3 being stopped on the belt conveyor 10. Then, at the position P7 of the preprocessing unit 100C, the extractor 30F extracts the contents including the sample from the sample bottle 1 through the pipette 61. After that, the dispenser 60 returns to the position P7 of the preprocessing unit 100D.

Then, at the position P7 of the preprocessing unit 100D, the injector 30G injects the contents including the sample in the sample bottle 1 into any of the vials 4 in the rack 5 through the pipette 61. The aforementioned operations of the dispenser 60, the extractor 30F, and the injector 30G are repeated until the contents are injected into a predetermined number of vials 4.

In a case where the dispenser 60 is provided with a plurality of pipettes 61, the contents may be simultaneously extracted from the plurality of sample bottles 1 by the plurality of pipettes 61, and the contents may be simultaneously injected into the plurality of vials 4 by the plurality of pipettes 61. Also, the preprocessing may be simultaneously performed by the preprocessing unit 100A or 100B while the preprocessing is performed by the preprocessing unit 100E.

After the contents are injected into the predetermined number of vials 4, the belt conveyor 10 transports the rack 5 to a downstream end of the belt conveyor 10. At the downstream end of the preprocessing unit 100D, the rack 5 is transferred to an analyzer not shown. The analyzer performs a predetermined analysis on the contents of each vial 4 in the rack 5 transferred from the preprocessing unit 100D. The analysis includes, for example, a quantitative analysis of residual agricultural chemicals contained in food, which is a sample. The analyzer may be, for example, a liquid chromatograph, a gas chromatograph, a liquid chromatography mass spectrometer (LC/MS) or a gas chromatography mass spectrometer (GC/MS) and may be another analyzer.

### (e) Fifth Preprocessing Unit

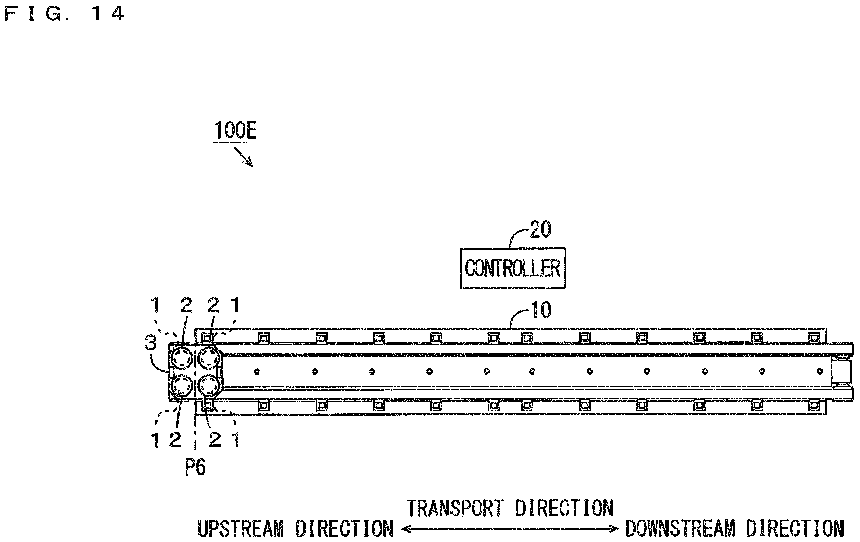

Fig. 14 is a diagram for explaining an operation of the fifth preprocessing unit 100E. As shown in Fig. 14, the rack 3 transferred from the preprocessing unit 100C of Fig. 12 is placed at the position P6 of the belt conveyor 10 of the preprocessing unit 100E by the robot arm 50 of Fig. 11. The position P6 may be an upstream end of the belt conveyor 10. The belt conveyor 10 transports the rack 3 to a downstream end of the belt conveyor 10. At the downstream end of the preprocessing unit 100E, the rack 3 is transferred to a discard device not shown. The discard device discards the contents of each sample bottle 1 in the rack 3 transferred from the preprocessing unit 100E.

### (5) Effects

In the preprocessing system 300 according to this embodiment, the rack 3 holding the plurality of sample bottles 1 is transported by the belt conveyor 10 in each preprocessing unit 100. The specific preprocessing is performed on the sample before analysis sealed in the sample bottle 1 by the processor 30 in at least one of the preprocessing units 100. The operation of the belt conveyor 10 or the processor 30 of each preprocessing unit 100 is controlled by the controller 20 of the preprocessing unit 100.

Also, the belt conveyor 10 of any of the preprocessing units 100 is arranged to be adjacent to the belt conveyor 10 of another preprocessing unit 100 in the transport direction, whereby the sample bottle 1 can be transferred between these belt conveyors 10. Thus, the preprocessing of the samples can be automatically performed by appropriately arranging the plurality of preprocessing units 100. This enables an increased throughput and improved labor saving.

Moreover, the arrangement of the plurality of preprocessing units 100 is changeable in accordance with the contents of the analysis of the samples. As such, the preprocessing corresponding to a desired analysis can easily be performed.

### (6) Other Embodiments

(a) While the four sample bottles 1 being held in the rack 3 are transported by the belt conveyor 10 in the aforementioned embodiment, the embodiment is not limited to this. For example, another number of sample bottles 1 (e.g., six sample bottles 1) being held in the rack 3 may be transported by the belt conveyor 10.

Alternatively, the sample bottle 1 not being held in the rack 3 may be transported by the belt conveyor 10. Even in a case where the sample bottles 1 are not held in the rack 3, the processor 30 of the preprocessing unit 100 may perform the preprocessing simultaneously (in parallel) on the materials stored in the plurality of sample bottles 1 or on the plurality of sample bottles 1.

(c) While the sensor 15 is a photoelectric sensor that includes the light emitter 15a and the light receiver 15b in the aforementioned embodiment, the embodiment is not limited to this. The sensor 15 may be a sensor of another type. For example, the sensor 15 may be a contact sensor that detects presence/absence of the rack 3 by physical contact with the rack 3 and may be a camera that detects presence/absence of the rack 3 by imaging. In addition, the preprocessing unit 100 does not have to include the sensor 15 in a case where the preprocessing unit 100 does not include the stopper 17.

## Claims

1. A preprocessing system (300) that performs preprocessing of a sample before analysis by a chromatograph, comprising:
a plurality of preprocessing units (100),
each preprocessing unit (100) including
a belt conveyor (10) that transports a sample bottle (1) in which a sample is sealed, and
a controller (20) that controls an operation of the belt conveyor (10),
wherein at least one of the plurality of preprocessing units (100) further includes a processor (30) that performs specific preprocessing based on control performed by the controller (20), and,
the belt conveyor (10) of each preprocessing unit (100) is arranged adjacent to a belt conveyor (10) of another preprocessing unit (100) in a transport direction and is configured to transfer the sample bottle (1) to the adjacent belt conveyor (10) or to receive the sample bottle (1) from the adjacent belt conveyor (10),
**characterized in that**:
each preprocessing unit (100) further includes a mechanical stopper (17) to temporarily stop the sample bottle (1) on the belt conveyor (10) at a predetermined position while the belt conveyor (10) is operated, such that the belt conveyor (10) of each preprocessing unit (100) is configured to transport a sample bottle (1) other than the sample bottle (1) stopped by the stopper (17).

2. The preprocessing system according to claim 1, wherein the preprocessed sample is dispensed into a chromatograph vial, and the dispensed sample is transferred to the chromatograph.

3. The preprocessing system according to claim 1 or 2, wherein the plurality of preprocessing units (100) include a first preprocessing unit (100A) and a second preprocessing unit (100B), and
the belt conveyor (10) of the first preprocessing unit (100A) and the belt conveyor (10) of the second preprocessing unit (100B) are arranged to be adjacent to each other in the transport direction.

4. The preprocessing system according to claim 3, wherein the controllers (20) of the first and second preprocessing units (100A, 100B) control operations of the belt conveyors (10) of the first and second preprocessing units (100A, 100B) such that the belt conveyors (10) of the first and second preprocessing units (100A, 100B) are rotated in a same direction during the transfer of the sample bottle (1).

5. The preprocessing system according to any one of claims 1 to 4, wherein the controller (20) of the at least one preprocessing unit (100) controls the operation of the belt conveyor (10) such that the belt conveyor (10) is rotated in a first direction, to transport the sample bottle (1) in the first direction, and controls the operation of the belt conveyor (10) such that the belt conveyor (10) is rotated in a second direction opposite to the first direction, to transport the sample bottle (1) in the second direction.

6. The preprocessing system according to claim 5, wherein the at least one preprocessing unit (100) includes an attacher/detacher (30A) that attaches a cap (2) to the sample bottle (1) or detaches the cap (2) from the sample bottle (1), and
the controller (20) of the preprocessing unit (100) controls the attacher/detacher (30A) such that the cap (2) is detached from the sample bottle (1), and then controls the belt conveyor (10) such that the sample bottle (1) is transported in the first direction, and the controller (20) of the preprocessing unit (100) subsequently causes the processor (30) to perform preprocessing, then controls the belt conveyor (10) such that the sample bottle (1) is transported in the second direction, and subsequently controls the attacher/detacher (30A) such that the cap (2) is attached to the sample bottle (1).

7. The preprocessing system according to any one of claims 1 to 6, wherein the belt conveyor (10) of each preprocessing unit (100) transports a rack (3) holding a plurality of sample bottles (1), and
the processor (30) of the at least one preprocessing unit (100) simultaneously performs preprocessing on the plurality of sample bottles (1) held in the rack (3).

8. The preprocessing system according to any one of claims 1 to 7, wherein the belt conveyor (10) includes a first belt and a second belt arranged in parallel, and
the stopper (17) is configured to be provided between the first belt and the second belt and to be projectable from a position further downward than a transport surface of each of the first and second belts to a position further upward than the transport surface.

9. The preprocessing system according to any one of claims 1 to 8, wherein the controller (20) of each preprocessing unit (100) controls an operation of the stopper (17) such that a distance between the plurality of sample bottles (1) transported by the belt conveyor (10) is increased or decreased.

10. The preprocessing system according to any one of claims 1 to 9, wherein each preprocessing unit (100) further includes a sensor (15) that detects whether the sample bottle (1) on the belt conveyor (10) arrives at the predetermined position, and
the controller (20) controls the operation of the stopper (17) based on a detection result by the sensor (15).

11. The preprocessing system according to any one of claims 1 to 10, wherein the at least one preprocessing unit (100) further includes a first robot arm (40) that transports the sample bottle (1) between the belt conveyor (10) and the processor (30).

12. The preprocessing system according to any one of claims 1 to 11, wherein at least one of the plurality of preprocessing units (100) further includes a second robot arm (50) capable of transferring the sample bottle (1) between the at least one preprocessing unit (100) and another preprocessing unit (100).

13. The preprocessing system according to any one of claims 1 to 12, wherein the processor (30) performs at least one of storage of the sample in the sample bottle (1), addition of an additive to the sample, shaking of the sample bottle (1), centrifugation of contents of the sample bottle (1), extraction of the contents from the sample bottle (1), and injection of the sample into an analyzing vial.

14. The preprocessing system according to any one of claims 1 to 13, wherein the processor (30) is provided in two or more preprocessing units (100), and
the processors (30) of the two or more preprocessing units (100) are configured to be capable of simultaneously performing the preprocessing.

## Patentansprüche

1. Vorverarbeitungssystem (300), das die Vorverarbeitung einer Probe vor Analyse durch einen Chromatographen durchführt, aufweisend:
eine Vielzahl von Vorverarbeitungseinheiten (100),
wobei jede Vorverarbeitungseinheit (100) aufweist:
einen Bandförderer (10), der eine Probenflasche (1) transportiert, in der eine Probe versiegelt ist, und
eine Steuervorrichtung (20), die einen Betrieb des Bandförderers (10) steuert,
wobei zumindest eine der Vielzahl von Vorverarbeitungseinheiten (100) ferner eine Verarbeitungseinrichtung (30) aufweist, die eine spezifische Vorverarbeitung auf Grundlage der von der Steuervorrichtung (20) durchgeführten Steuerung durchführt, und
der Bandförderer (10) jeder Vorverarbeitungseinheit (100) in einer Transportrichtung benachbart zu einem Bandförderer (10) einer anderen Vorverarbeitungseinheit (100) angeordnet ist und derart konfiguriert ist, dass er die Probenflasche (1) zu dem benachbarten Bandförderer (10) überführt oder die Probenflasche (1) von dem benachbarten Bandförderer (10) aufnimmt,
**dadurch gekennzeichnet, dass**:
jede Vorverarbeitungseinheit (100) ferner einen mechanischen Anschlag (17) zum vorübergehenden Anhalten der Probenflasche (1) auf dem Bandförderer (10) an einer vorbestimmten Position aufweist, während der Bandförderer (10) betrieben wird, so dass der Bandförderer (10) jeder Vorverarbeitungseinheit (100) derart konfiguriert ist, dass er eine andere Probenflasche (1) als die durch den Anschlag (17) angehaltene Probenflasche (1) transportiert.

2. Vorverarbeitungssystem nach Anspruch 1, wobei die vorverarbeitete Probe in einen Chromatographen-Fläschchen verteilt ist und die verteilte Probe zu dem Chromatographen überführt wird.

3. Vorverarbeitungssystem nach Anspruch 1 oder 2, wobei die Vielzahl von Vorverarbeitungseinheiten (100) eine erste Vorverarbeitungseinheit (100A) und eine zweite Vorverarbeitungseinheit (100B) aufweisen, und
der Bandförderer (10) der ersten Vorverarbeitungseinheit (100A) und der Bandförderer (10) der zweiten Vorverarbeitungseinheit (100B) derart angeordnet sind, dass sie in der Transportrichtung nebeneinander sind.

4. Vorverarbeitungssystem nach Anspruch 3, wobei die Steuervorrichtungen (20) der ersten und der zweiten Vorverarbeitungseinheit (100A, 100B) den Betrieb der Bandförderer (10) der ersten und der zweiten Vorverarbeitungseinheit (100A, 100B) derart steuern, dass die Bandförderer (10) der ersten und der zweiten Vorverarbeitungseinheit (100A, 100B) während der Überführung der Probenflasche (1) in eine gleiche Richtung gedreht werden.

5. Vorverarbeitungssystem nach einem der Ansprüche 1 bis 4, wobei die Steuervorrichtung (20) der zumindest einen Vorverarbeitungseinheit (100) den Betrieb des Bandförderers (10) derart steuert, dass der Bandförderer (10) in eine erste Richtung gedreht wird, um die Probenflasche (1) in der ersten Richtung zu transportieren, und den Betrieb des Bandförderers (10) derart steuert, dass der Bandförderer (10) in einer zweiten, der ersten Richtung entgegengesetzten Richtung gedreht wird, um die Probenflasche (1) in der zweiten Richtung zu transportieren.

6. Vorverarbeitungssystem nach Anspruch 5, wobei die zumindest eine Vorverarbeitungseinheit (100) eine Befestigungseinrichtung/Lösungseinrichtung (30A) aufweist, die eine Kappe (2) an der Probenflasche (1) befestigt oder die Kappe (2) von der Probenflasche (1) löst, und
die Steuervorrichtung (20) der Vorverarbeitungseinheit (100) die Befestigungseinrichtung/Lösungseinrichtung (30A) derart steuert, dass die Kappe (2) von der Probenflasche (1) gelöst wird, und dann den Bandförderer (10) derart steuert, dass die Probenflasche (1) in die erste Richtung transportiert wird, und die Steuervorrichtung (20) der Vorverarbeitungseinheit (100) die Verarbeitungseinrichtung (30) anschließend veranlasst, die Vorverarbeitung durchzuführen, dann denn Bandförderer (10) derart steuert, dass die Probenflasche (1) in der zweiten Richtung transportiert wird, und dann die Befestigungseinrichtung/Lösungseinrichtung (30A) derart steuert, dass die Kappe (2) an der Probenflasche (1) befestigt wird.

7. Vorverarbeitungssystem nach einem der Ansprüche 1 bis 6, wobei der Bandförderer (10) jeder Vorverarbeitungseinheit (100) ein Gestell (3) transportiert, das eine Vielzahl von Probenflaschen (1) hält, und
die Verarbeitungseinrichtung (30) der zumindest einen Vorverarbeitungseinheit (100) gleichzeitig eine Vorverarbeitung an der Vielzahl von Probenflaschen (1) durchführt, die in dem Gestell (3) gehalten werden.

8. Vorverarbeitungssystem nach einem der Ansprüche 1 bis 7, wobei der Bandförderer (10) ein erstes Band und ein zweites Band aufweist, die parallel angeordnet sind, und
der Anschlag (17) derart konfiguriert ist, dass er zwischen dem ersten Band und dem zweiten Band vorgesehen ist und aus einer Position weiter unten als eine Transportfläche von jedem der ersten und zweiten Bänder in eine Position weiter oben als die Transportfläche zum Vorstehen gebracht werden kann.

9. Vorverarbeitungssystem nach einem der Ansprüche 1 bis 8, wobei die Steuervorrichtung (20) jeder Vorverarbeitungseinheit (100) einen Betrieb des Anschlags (17) derart steuert, dass ein Abstand zwischen der Vielzahl von Probenflaschen (1), die durch den Bandförderer (10) transportiert werden, vergrößert oder verkleinert wird.

10. Vorverarbeitungssystem nach einem der Ansprüche 1 bis 9, wobei jede Vorverarbeitungseinheit (100) ferner einen Sensor (15) aufweist, der detektiert, ob die Probenflasche (1) an dem Bandförderer (10) an der vorbestimmten Position ankommt, und
die Steuervorrichtung (20) den Betrieb des Anschlags (17) auf Grundlage eines Detektionsergebnisses durch den Sensor (15) steuert.

11. Vorverarbeitungssystem nach einem der Ansprüche 1 bis 10, wobei die zumindest eine Vorverarbeitungseinheit (100) ferner einen ersten Roboterarm (40) aufweist, der die Probenflasche (1) zwischen dem Bandförderer (10) und der Verarbeitungseinrichtung (30) transportiert.

12. Vorverarbeitungssystem nach einem der Ansprüche 1 bis 11, wobei zumindest eine der Vielzahl von Vorverarbeitungseinheiten (100) ferner einen zweiten Roboterarm (50) aufweist, der in der Lage ist, die Probenflasche (1) zwischen der zumindest einen Vorverarbeitungseinheit (100) und einer anderen Vorverarbeitungseinheit (100) zu überführen.

13. Vorverarbeitungssystem nach einem der Ansprüche 1 bis 12, wobei die Verarbeitungseinrichtung (30) ein Speichern der Probe in der Probenflasche (1) und/oder ein Hinzufügen eines Additivs zu der Probe und/oder ein Schütteln der Probenflasche (1) und/oder Zentrifugieren von Inhalten der Probenflasche (1) und/oder ein Extrahieren der Inhalte der Probenflasche (1) und/oder ein Einspritzen der Probe in ein Analysefläschchen durchführt.

14. Vorverarbeitungssystem nach einem der Ansprüche 1 bis 13, wobei die Verarbeitungseinrichtung (30) in zwei oder mehr Vorverarbeitungseinheiten (100) vorgesehen ist, und
die Verarbeitungseinrichtungen (30) der zwei oder mehr Vorverarbeitungseinheiten (100) derart konfiguriert sind, dass sie in der Lage sind, die Vorverarbeitung gleichzeitig durchzuführen.

## Revendications

1. Système de prétraitement (300) qui effectue le prétraitement d'un échantillon avant son analyse par un chromatographe, comprenant :
une pluralité d'unités de prétraitement (100),
chaque unité de prétraitement (100) incluant
un convoyeur à bande (10) qui transporte un flacon d'échantillon (1) dans lequel un échantillon est scellé, et
un dispositif de commande (20) qui commande un fonctionnement du convoyeur à bande (10),
au moins une de la pluralité d'unités de prétraitement (100) incluant en outre un processeur (30) qui effectue un prétraitement spécifique sur la base de la commande effectuée par le dispositif de commande (20), et
le convoyeur à bande (10) de chaque unité de prétraitement (100) étant agencé adjacent à un convoyeur à bande (10) d'une autre unité de prétraitement (100) dans une direction de transport et étant configuré pour transférer le flacon d'échantillon (1) vers le convoyeur à bande adjacent (10) ou pour recevoir le flacon d'échantillon (1) du convoyeur à bande adjacent (10),
**caractérisé en ce que** :
chaque unité de prétraitement (100) inclut en outre une butée mécanique (17) pour temporairement arrêter le flacon d'échantillon (1) sur le convoyeur à bande (10) à une position prédéterminée pendant que le convoyeur à bande (10) fonctionne, de telle sorte que le convoyeur à bande (10) de chaque unité de prétraitement (100) est configuré pour transporter un flacon d'échantillon (1) autre que le flacon d'échantillon (1) arrêté par la butée (17).

2. Système de prétraitement selon la revendication 1, dans lequel l'échantillon prétraité est distribué dans une fiole de chromatographe, et l'échantillon distribué est transféré au chromatographe.

3. Système de prétraitement selon la revendication 1 ou 2, dans lequel la pluralité d'unités de prétraitement (100) inclut une première unité de prétraitement (100A) et une seconde unité de prétraitement (100B), et
le convoyeur à bande (10) de la première unité de prétraitement (100A) et le convoyeur à bande (10) de la seconde unité de prétraitement (100B) sont agencés de manière à être adjacents l'un à l'autre dans la direction de transport.

4. Système de prétraitement selon la revendication 3, dans lequel les dispositifs de commande (20) de la première et de la seconde unité de prétraitement (100A, 100B) commandent les fonctionnements des convoyeurs à bande (10) de la première et de la seconde unité de prétraitement (100A, 100B) de telle sorte que les convoyeurs à bande (10) de la première et de la seconde unité de prétraitement (100A, 100B) sont tournés dans une même direction pendant le transfert du flacon d'échantillon (1).

5. Système de prétraitement selon l'une quelconque des revendications 1 à 4, dans lequel le dispositif de commande (20) de l'au moins une unité de prétraitement (100) commande le fonctionnement du convoyeur à bande (10) de telle sorte que le convoyeur à bande (10) est tourné dans une première direction, pour transporter le flacon d'échantillon (1) dans la première direction, et commande le fonctionnement du convoyeur à bande (10) de telle sorte que le convoyeur à bande (10) est tourné dans une seconde direction opposée à la première direction, pour transporter le flacon d'échantillon (1) dans la seconde direction.

6. Système de prétraitement selon la revendication 5, dans lequel l'au moins une unité de prétraitement (100) inclut un attacheur/détacheur (30A) qui attache un capuchon (2) au flacon d'échantillon (1) ou détache le capuchon (2) du flacon d'échantillon (1), et
le dispositif de commande (20) de l'unité de prétraitement (100) commande l'attacheur/détacheur (30A) de telle sorte que le capuchon (2) soit détaché du flacon d'échantillon (1), puis commande le convoyeur à bande (10) de telle sorte que le flacon d'échantillon (1) soit transporté dans la première direction, et le dispositif de commande (20) de l'unité de prétraitement (100) amène ensuite le processeur (30) à effectuer le prétraitement, puis commande le convoyeur à bande (10) de telle sorte que le flacon d'échantillon (1) soit transporté dans la seconde direction, et commande ensuite l'attacheur/détacheur (30A) de telle sorte que le capuchon (2) soit fixé au flacon d'échantillon (1).

7. Système de prétraitement selon l'une quelconque des revendications 1 à 6, dans lequel le convoyeur à bande (10) de chaque unité de prétraitement (100) transporte un casier (3) contenant une pluralité de flacons d'échantillons (1), et
le processeur (30) de l'au moins une unité de prétraitement (100) effectue simultanément un prétraitement sur la pluralité de flacons d'échantillons (1) maintenus dans le casier (3).

8. Système de prétraitement selon l'une quelconque des revendications 1 à 7, dans lequel le convoyeur à bande (10) inclut une première bande et une seconde bande agencées en parallèle, et
la butée (17) est configurée pour être fournie entre la première bande et la seconde bande et pour pouvoir être projetée d'une position plus en bas qu'une surface de transport de chacune des première et seconde bandes à une position plus en haut que la surface de transport.

9. Système de prétraitement selon l'une quelconque des revendications 1 à 8, dans lequel le dispositif de commande (20) de chaque unité de prétraitement (100) commande un fonctionnement de la butée (17) de telle sorte qu'une distance entre la pluralité de flacons d'échantillons (1) transportés par le convoyeur à bande (10) soit augmentée ou diminuée.

10. Système de prétraitement selon l'une quelconque des revendications 1 à 9, dans lequel chaque unité de prétraitement (100) inclut en outre un capteur (15) qui détecte si le flacon d'échantillon (1) sur le convoyeur à bande (10) arrive à la position prédéterminée, et
le dispositif de commande (20) commande le fonctionnement de la butée (17) sur la base d'un résultat de détection par le capteur (15).

11. Système de prétraitement selon l'une quelconque des revendications 1 à 10, dans lequel l'au moins une unité de prétraitement (100) inclut en outre un premier bras robotisé (40) qui transporte le flacon d'échantillon (1) entre le convoyeur à bande (10) et le processeur (30).

12. Système de prétraitement selon l'une quelconque des revendications 1 à 11, dans lequel au moins une de la pluralité d'unités de prétraitement (100) inclut en outre un second bras robotisé (50) capable de transférer le flacon d'échantillon (1) entre l'au moins une unité de prétraitement (100) et une autre unité de prétraitement (100).

13. Système de prétraitement selon l'une quelconque des revendications 1 à 12, dans lequel le processeur (30) effectue au moins une opération parmi un stockage de l'échantillon dans le flacon d'échantillon (1), un ajout d'un additif à l'échantillon, une agitation du flacon d'échantillon (1), une centrifugation du contenu du flacon d'échantillon (1), une extraction du contenu du flacon d'échantillon (1), et une injection de l'échantillon dans une fiole d'analyse.

14. Système de prétraitement selon l'une quelconque des revendications 1 à 13, dans lequel le processeur (30) est fourni dans deux unités de prétraitement (100) ou plus, et
les processeurs (30) des deux unités de prétraitement (100) ou plus sont configurés pour être capables d'effectuer simultanément le prétraitement.
